## Europäisches Patentamt
## European Patent Office
## Office européen des brevets

(19)

(11) Publication number: **0 087 741**
**B1**

(12)
# EUROPEAN PATENT SPECIFICATION

(45) Date of publication of patent specification: **07.01.87**

(51) Int. Cl.⁴: **F 16 L 27/08**

(21) Application number: **83101736.3**

(22) Date of filing: **23.02.83**

(54) Variable angle joint.

(30) Priority: **27.02.82 GB 8205841**

(43) Date of publication of application:
**07.09.83 Bulletin 83/36**

(45) Publication of the grant of the patent:
**07.01.87 Bulletin 87/02**

(84) Designated Contracting States:
**AT BE CH DE FR GB IT LI LU NL SE**

(56) References cited:
**DE-A-2 306 642**
**DE-A-2 500 297**
**DE-A-2 733 571**
**GB-A- 286 405**

**GF-KATALOG of 1952**

(73) Proprietor: **Camp, Douglas Charles Peter John**
**"Ashenden" 2 Merrow Road**
**Cheam Surrey (GB)**

(72) Inventor: **MacIntyre, Hugh Melville Gordon**
**41 Falkland Road**
**London N.W.5 2PU (GB)**

(74) Representative: **MATTHEWS HADDAN & CO**
**Haddan House 33 Elmfield Road**
**Bromley, Kent BR1 1SU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a variable angle joint.

The Applicant is aware of several prior inventions, each of which comprises a variable angle pipe joint comprising two hollow elements, each element having a tubular connecting portion for connection to a pipe, and a tubular coupling portion, the respective longitudinal axes of each associated connecting portion and coupling portion being at an angle to each other, and the respective coupling portions of the two elements being engageable such that they are relatively rotatable to provide a desired relative orientation of the axes of the respective connecting portions.

The coupling portions of said hollow elements of the pipe joints disclosed by German Patents DE—A—2500297 and DE—A—2306642, UK Patent GB—A—286405, and by the Georg Fischer pipe joint disclosed in the GF-Katalog of 1952, are configured to be engageable in a manner to provide axial sealing between said coupling portions. These pipe joints include a compressing means in the form of a collar or one of more fasteners such as bolts to effect sealing of the respective coupling portions by axial compression.

The said pipe joints of DE—A—2500297, DE—A—2306642 and of Georg Fischer, rely on the sealing engagement of two surfaces that lie in a plane substantially at 90 degrees to the respective longitudinal axes of the coupling portions. In contrast, the sealing surfaces of the coupling portions of the pipe joint of the said UK patent GB—A—286405 are frusto-conical. However, these sealing surfaces rely, in use, on frictional engagement between each other, which requires axial compression of the elements of the pipe joint and inhibits rotation of the elements with respect to each other when they are sealingly engaged with each other.

The specification of a further German Patent DE—A—2733571 of which the Applicant is aware and which also discloses a variable angle pipe joint as described broadly above, specifies primarily a labyrinth seal, and indicates that a further packing or seal can be used with high pressure fluids. It is further specified that an annular space is provided in which the packing is inserted. The packing is compressed from all sides which includes axial compression. The configuration of this pipe joint obviates the need for a separate compressing element such as a sleeve nut or clamping ring, but the strength or tightness of the connection between the elements relies on the supporting surface between the connecting flanges, on their being virtually no wear between the axially engaging surfaces, and on the elasticity of the engaging parts. Thus it is clear that although radial sealing may occur between the elements of certain of the embodiments of the invention disclosed by this patent, the sealing between the elements is effected primarily by axial compression. Rotation of the elements with respect to each other when they are sealingly engaged with each other is accordingly inhibited.

An object of the present invention is to provide a joint by which two pipes may be sealingly connected together with their respective axes in alignment or inclined to each other at any one of a range of angles, preferably from 90 degrees to 180 degrees, and such that the pipes can be rotated with respect to each other when they are sealingly connected together without such rotation affecting the seal.

According to the invention there is provided a variable angle pipe joint comprising a first hollow element having an end tubular portion, which defines a longitudinal axis, for connection to a pipe, and an end coupling portion connected at one end to said tubular portion and being formed with a spigot-like formation at its other end which defines a longitudinal axis set at an angle to the axis of said end tubular portion;

a second hollow element having an end tubular portion, which also defines a longitudinal axis, for connection to a pipe, and an end coupling portion connected at one end to said end tubular portion of said second element and being formed with a socket-like formation at its other end which defines a longitudinal axis that is at an angle to the axis of its associated end tubular portion;

the spigot-like formation being receivable within the socket-like formation with the end coupling portions being relatively rotatable to determine the relative orientation of the axes of the two tubular portions; and

a locking ring engageable over the socket-like formation;

the variable angle joint being characterised in that

the spigot-like formation defines an external cylindrical sealing surface and the socket-like formation defines an internal cylindrical sealing surface engageable over the external cylindrical sealing surface to effect radial sealing between the end coupling portions of the first and second hollow elements independently of axial compression thereof,

the external or the internal cylindrical sealing surface having a circumferential groove in which a sealing ring is receivable such that in use it is located between the external and internal cylindrical sealing surfaces and such that the socket-like formation has a push fit over the sealing ring in the spigot-like formation to promote radial sealing between the end coupling portions, and the locking ring serving merely to secure the socket-like formation and the spigot-like formation together in a manner to inhibit axial displacement between them but not providing any forces on the sealing surfaces so that the end coupling portions remain relatively rotatable in their sealed configuration, the allow adjustment of the relative orientation of the axes of the two tubular portions.

Each end coupling portion may be curved and the axis of each tubular portion and associated spigot-like and socket-like formation respectively may be at an angle of 135 degrees to each other.

The locking ring may have an internal cylindrical surface and in inwardly extending flange at one end and may be fixed in place by adhesive or welding, whereupon the two hollow elements can still be rotated relative to each other, the flange engaging a rib on the spigot-like formation of the first hollow element and the internal surface of the locking ring engaging over the socket-like formation of the second hollow element.

The invention will now be described by way of example with reference to the accompanying drawings, in which:

Figure 1 shows an assembly of a variable angle joint according to the invention, comprising interconnected hollow elements;

Figure 2 shows a first one of said hollow elements having an external surface;

Figure 3 shows a second one of said hollow elements having an internal surface; and

Figures 4A to 4C show plan, elevation and section of a locking ring for the variable angle joint of Figure 1.

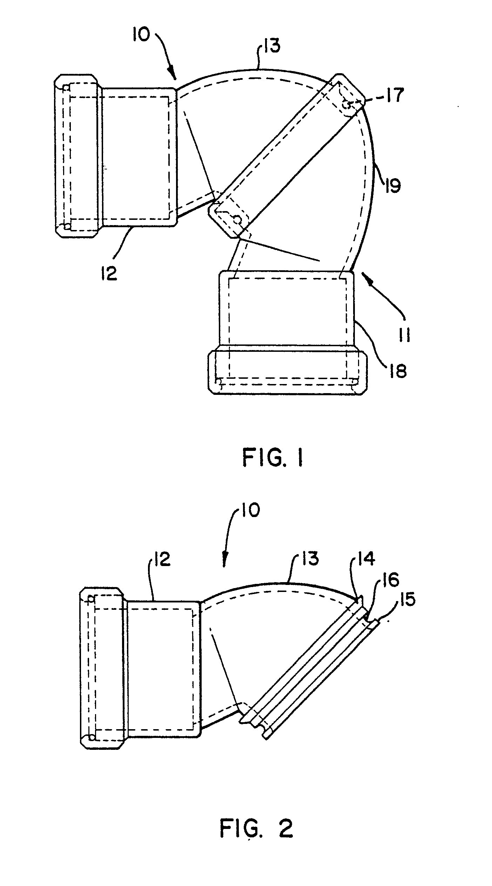

The joint assembly of the example shown in the drawings is intended to join together two pipes at angles of from 90 degrees to 180 degrees and comprises two hollow elements shown generally at 10 and 11. The hollow element 10 is provided with a straight end tubular portion 12, which defines a longitudinal axis and which may be screw-threaded internally or lined with solder, and has an end coupling portion 13 formed integrally with the tubular portion 12. The end coupling portion 13 (Figure 2) is enlarged in relation to the tubular portion 12 in order to accommodate a cylindrical rim or end portion having a circumferential rib 14 and an external cylindrical surface 15 containing a circumferential groove 16 to receive a sealing ring 17 (see Figure 1). The cylindrical surface 15 defines a longitudinal axis at an angle of 135 degrees to the longitudinal axis of the tubular portion 12.

The hollow element 11 is of similar construction to that of the element 10 in that an end tubular portion 18 which defines a longitudinal axis is formed integrally with an end coupling portion 19 that is provided with a cylindrical internal surface 20 machined within a rim 21. The internal surface 20 is made to a tolerance such that it engages the sealing ring 17 with a push fit. The internal surface 20 defines a longitudinal axis which is at 135 degrees to the longitudinal axis of the tubular portion 18.

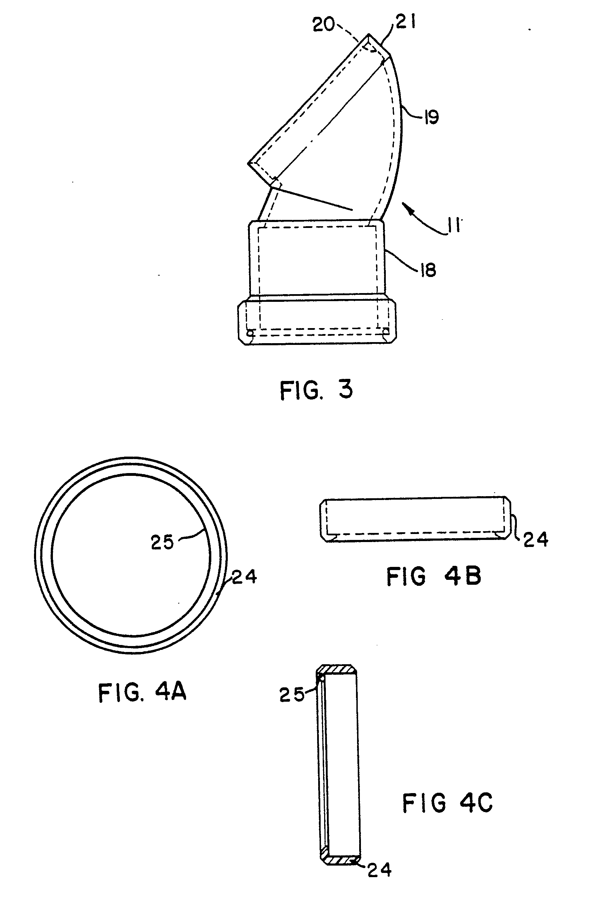

The locking ring (Figures 4A—4C) comprises a cylindrical portion 24 and an internally extending flange 25. The locking ring and the external cylindrical surface 15 may be formed with screwthreads (not shown) to secure the two hollow elements 10, 11 together. The flange 25 of the locking ring engages the rib 14 and the internal surface of the locking ring engages over the end of the portion 19.

On assembly the locking ring passes over the tubular portion 12 and end coupling portion 13 of the element 10. The locking ring is secured by adhesive, or by welding the locking ring to the exterior of the rim 21.

When the locking ring is fixed in place, by virtue of the profile of the ring the assembly cannot come apart although the two cylindrical engaging surfaces 15 and 20 respectively may rotate one within the other. Even though rotation can be effected, the longitudinal axes of the two tubular portions 12, 18 either intersect or may come into alignment.

## Claims

1. A variable angle pipe joint comprising a first hollow element (10) having an end tubular portion (12), which defines a longitudinal axis, for connection to a pipe, and an end coupling portion (13) connected at one end to said tubular portion (12) and being formed with a spigot-like formation at its other end which defines a longitudinal axis set at an angle to the axis of said end tubular portion (12);

a second hollow element (11) having an end tubular portion (18), which also defines a longitudinal axis, for connection to a pipe, and an end coupling portion (19) connected at one end to said end tubular portion (18) of said second element (11) and beingformed with a socket-like formation at its other end which defines a longitudinal axis that is at an angle to the axis of its associated end tubular portion (18);

the spigot-like formation being receivable within the socket-like formation with the end coupling portions (13), (19) being relatively rotatable to determine the relative orientation of the axes of the two tubular portions (12), (18); and

a locking ring engageable over the socket-like formation;

the variable angle joint being characterised in that

the spigot-like formation defines an external cylindrical sealing surface (15) and the socket-like formation defines an internal cylindrical sealing surface (20) engageable over the external cylindrical sealing surface (15) to effect radial sealing between the end coupling portions (13), (19) of the first and second hollow elements (10), (11) independently of axial compression thereof,

the external or the internal cylindrical sealing surface (15), (20) having a circumferential groove (16) in which a sealing ring (17) is receivable such that in use it is located between the external and internal cylindrical sealing (15), (20) and such that the socket-like formation has a push fit over the sealing ring in the spigot-like formation to promote radial sealing between the end coupling portions (13), (19), and the locking ring serving merely to secure the socket-like formation and the spigot-like formation together in a manner to inhibit axial displacement between them but not providing any forces on the sealing surface so that the end coupling portions (13), (19) remain relatively rotatable in their sealed configuration, to allow adjustment of the relative orientation of the axes of the two tubular portions (12), (18).

2. A pipe joint as claimed in Claim 1 characterised in that each end coupling portion (13), (19) is curved.

3. A pipe joint as claimed in Claim 1 or Claim 2 characterised in that the axis of each tubular portion (12), (18) and the axis of its associated spigot-like or socket-like formation respectively are at an angle of 135 degrees to each other.

4. A pipe joint as claimed in any one of the preceding claims, characterised in that said locking ring has an internal cylindrical surface and an inwardly extending flange (25) at one end and is fixed in place by adhesive or welding, whereupon the two hollow elements (10), (11) can still be rotated relatively to each other, the flange (25) engaging a rib on the spigot-like formation of the first element (10) and the internal surface engaging over the socket-like formation of the second element (11).

## Patentansprüche

1. Rohranschlußverbindung für veränderliche Anschlußwinkel, umfassend ein erstes Hohlelement (10) mit einem an ein Rohr anzuschließenden rohrförmigen Endabschnitt (12), welcher eine Längsachse definiert, und einem Kupplungsendabschnitt (13), welcher mit einem Ende mit dem rohrförmigen Abschnitt (12) verbunden ist und welcher an seinem anderen Ende eine muffenringartige Ausbildung aufweist, die eine in einem Winkel zur Längsachse des rohrförmigen Endabschnittes (12) stehende Längsachse definiert;

weiter umfassend ein zweites Hohlelement (11) mit einem rohrförmigen, an ein Rohr anzuschließenden rohrförmigen Endabschnitt (18), welcher eine Längsachse definiert, und mit einem Kupplungsendabschnitt (19), welcher mit einem Ende mit den rohrförmigen Endabschnitt (18) des zweiten Hohlelementes (11) verbunden ist und welcher an seinem anderen Ende eine muffenaufnahmeartige Ausbildung aufweist, die eine in einem Winkel zur Längsachse des zugeordneten rohrförmigen Endabschnittes (18) stehende Längsachse definiert;

wobei die muffenringartige Ausbildung in der muffenaufnahmeartigen Ausbildung aufnehmbar ist und die Kupplungsendabschnitte (13, 19) gegeneinander verdrehbar sind, so daß sie die relative Anordnung der Achsen der beiden rohrförmigen Endabschnitte (12, 18) bestimmen; und wobei eine Verriegelungsring die muffenaufnahmeartige Ausbildung übergreift, dadurch gekennzeichnet, daß die muffenringartige Ausbildung eine äußere zylindrische Dichtfläche (15) bildet, daß die muffenaufnahmeartige Ausbildung eine innere zylindrische Dichtfläche (20) bildet, die die äußere zylindrische Dichtfläche (15) übergreifen kann, um eine radiale Abdichtung zwischen den Kupplungsendabschnitten (13, 19) des ersten bzw. zweiten Hohlelements (10, 11) unabhängig vom Aufbringen einer axialen Druckkraft auf dieselben zu erzielen, wobei die äußere oder die innere zylindrischen Dichtfläche (15, 20) eine Ringnut (16) aufweist, in welcher ein Dichtring (17) aufgenommen werden kann derart, daß dieser im Gebrauch zwischen der inneren und äußeren zylindrischen Dichtfläche (15, 20) angeordnet ist und daß die muffenaufnahmeartige Ausbildung eine Schiebepassung zum Dichtring in der muffenringartigen Ausbildung hat und eine radiale Abdichtung zwischen den Kupplungsendabschnitten (13, 19) bewirkt, und wobei der Verriegelungsring dazu dient, die muffenaufnahmeartige und muffenringartige Ausbildung in einer Weise gegeneinander zu sichern, daß ein axialer Versatz zwischen diesen ohne Aufbringen von Kräften auf die Dichtflächen verhindert wird, so daß die Kupplungsendabschnitte (13, 19) in ihrer Abdichtanordnung relativ zueinander verdrehbar bleiben, so daß eine Einstellung der relativen Anordnung der Achsen der beiden rohrförmigen Endabschnitte möglich ist.

2. Rohranschlußverbindung nach Anspruch 1, dadurch gekennzeichnet, daß jeder der Kupplungsendabschnitte (13, 19) gekrümmt ist.

3. Rohranschlußverbindung nach Anspruch 1 oder 2, dadurch gekennzeichnet, daß die Achsen der rohrförmigen Endabschnitte (12, 18) und die Achsen der jeweils zugeordneten muffenringartigen bzw. muffenaufnahmeartigen Ausbildung jeweils in einem Winkel von 135° zueinander stehen.

4. Rohranschlußverbindung nach einem der vorstehenden Ansprüche, dadurch gekennzeichnet, daß der Verriegelungsring eine innere zylindrische Oberfläche und einen nach innen stehenden Flansch (25) an einem Ende aufweist und durch Kleben oder Schweissen in seiner Position gehalten wird derart, daß die beiden Hohlelemente (10, 11) ständig gegeneinander verdrehbar bleiben, wobei die Flansch (25) an einem Ringvorsprung an der muffenringartigen Ausbildung des ersten Hohlelementes (10) zur Anlage kommt und die innere Oberfläche über die muffenaufnahmeartige Ausbildung des zweiten Hohlelementes (11) übergreift.

## Revendications

1. Un raccord à angle variable pour tuyaux, comportant un premier élément creux (10) présentant une partie extrême tubulaire (12) qui définit un axe longitudinal, pour la liaison avec un tuyau, et une partir extrême de couplage (13) reliée à une extrémité à ladite partie tubulaire (12) et présentant à son autre extrémité une formation mâle qui définit un axe longitudinal formant un angle avec l'axe de ladite partie extrême tubulaire (12);

un second élément creux (11) présentant une partie extrême tubulaire (18) qui définit également un axe longitudinal, pour la liaison avec un tuyau, et une partie extrême de couplage (19) reliée à une extrémité à ladite partie extrême tubulaire (18) dudit second élément (11) et présentant à son autre extrémité une formation femelle qui définit un axe longitudinal formant un angle avec l'axe de la partie extrême tubulaire associée (18);

la formation mâle pouvant être reçue dans la formation femelle, les parties extrêmes de couplage (13, 19) pouvant tourner l'une par rapport à l'autre pour déterminer l'orientation relative des axes des deux parties tubulaires (12, 18); et

une bague de verrouillage qui peut être placée par-dessus la formation femelle;

le joint à angle variable étant caractérisé en ce que

la formation mâle définit une surface cylindrique extérieure d'étanchéité (15) et la formation femelle définit une surface cylindrique intérieure d'étanchéité (20) propre à venir coopérer sur la surface cylindrique extérieure d'étanchéité (15) pour effectuer une étanchéité radiale entre les parties extrêmes de couplage (13, 19) des premier et second éléments creux (10, 11), indépendamment de la compression axiale de ceux-ci, la surface cylindrique extérieure ou intérieure d'étanchéité (15, 20) présentant une gorge circonférencielle (16) dans laquelle une bague d'étanchéité (17) peut être reçue de telle manière que, en fonctionnement, elle soit située entre les surfaces cylindriques extérieure et intérieure d'étanchéité (15, 20) et que la formation femelle s'adapte par poussée sur la bague d'étanchéité de la formation mâle pour favoriser l'étanchéité radiale entre les parties extrêmes de couplage (13, 19), la bague de verrouillage ne servant qu'à assujettir l'une à l'autre la formation femelle et la formation mâle de manière à interdire un déplacement axial entre celles-ci mais sans créer de forces sur les surfaces d'étanchéité, de sorte que les parties extrêmes de couplage (13, 19) restent tournantes l'une par rapport à l'autre dans leur configuration d'étanchéité, pour permettre le réglage de l'orientation relative des axes des deux parties tubulaires (12, 18).

2. Un joint pour tuyaux selon la revendication 1, caractérisé en ce que chaque partie extrême de couplage (13, 19) est coudée.

3. Un raccord pour tuyaux selon la revendication 1 ou la revendication 2, caractérisé en ce que l'axe de chaque partie tubulaire (12, 18) et l'axe de la formation mâle ou femelle associée forment entre eux un angle de 135 degrés.

4. Un raccord pour tuyaux selon l'une quelconque des revendications précédentes, caractérisé en ce que ladite bague de verrouillage présente une surface cylindrique intérieure et, à une extrémité, une collerette (25) s'étendant vers l'intérieur, et est maintenue en place par un adhésif ou une soudure, les deux éléments creux (10, 11) pouvant alors encore être tournés l'un par rapport à l'autre, la collerette (25) coopérant avec une nervure de la formation mâle du premier élément (10) et la surface intérieure se plaçant par-dessus la formation femelle du second élément 11.

0 087 741

FIG. 1

FIG. 2

1

FIG. 3

FIG. 4A

FIG 4B

FIG 4C